# EUROPÄISCHE PATENTSCHRIFT

(11) **EP 0 617 382 B1**
(45) Veröffentlichungstag und Bekanntmachung des Hinweises auf die Patenterteilung: **03.03.1999**
(21) Anmeldenummer: 94104785.4
(22) Anmeldetag: 25.03.1994
(51) Int. Cl.: G06K 19/04, G06K 19/077

(54) **Wertkarte mit auswechselbar gehaltertem Einsteckteil**
Credit card with removable plug-in part
Carte de crédit avec une pièce enfichable amovible

(30) Priorität: 06.07.1993 DE 9309997 U; 06.07.1993 DE 9309996 U; 27.08.1993 DE 9312755 U; 26.03.1993 DE 9304499 U
(43) Veröffentlichungstag der Anmeldung: 28.09.1994
(73) Patentinhaber: Tewes, Wilhelm, D-40822 Mettmann (DE)
(72) Erfinder: Tewes, Wilhelm, D-40822 Mettmann (DE)
(74) Vertreter: Müller, Karl-Ernst, Dr., Dipl.-Ing.

(56) Entgegenhaltungen:
- EP-A- 0 495 216
- DE-C- 3 804 361
- FR-A- 2 538 930
- PATENT ABSTRACTS OF JAPAN vol. 10, no. 202 (P-477) 15. Juli 1986 & JP-A-61 043 388 (MITSUBISHI PLASTICS IND LTD) 1. März 1986

## Beschreibung

Die Erfindung betrifft eine Wertkarte mit internationaler Normung der Außenabmessungen und der Position der Kontaktfläche eines implantierten Halbleiterchips, wobei der Halbleiterchip auf einem in seinen Abmessungen gegenüber der Wertkarte wesentlich kleineren Einsteckteil angeordnet ist, welcher Einsteckteil in einer in der Wertkarte angeordneten Ausnehmung im Klemmsitz und auswechselbar gehalten ist, wobei die Ausnehmung in der Wertkarte derart angeordnet ist, daß die Wertkarte mit dem darin eingerasteten Einsteckteil für weitere Wertkartenanwendungen benutzbar bleibt und gegebenenfalls der Einsteckteil selbst als unabhängige Minichipkarte in wesentlich kleineren Endgeräten einsetzbar ist.

Eine Wertkarte mit den vorgenannten Merkmalen ist in der DE 38 04 361 C1 beschrieben. Die als Aufbewahrungskarte, Kredit- beziehungsweise Debitkarte für Geldausgabeautomaten, Kartentelefone, andere Endgeräte der Kommunikationstechnik oder auch Identifikationskarten für die Zugangskontrolle von sicherheitsempfindlichen Bereichen dienenden Wertkarten unterliegen hinsichtlich ihrer Abmessungen einer internationalen Normung; dies gilt auch für die inzwischen unter dem Begriff SIM-Modul-Karten bekanntgewordenen und in ihren Abmessungen nur noch etwa ein Zehntel der Größe gebrauchsüblicher Wertkarten umfassenden Karten zum Betrieb von Handtelefonen als kleinen Endgeräten. Die

DE 38 04 361 C1 beschreibt dazu eine zweckmäßige Kombination der Wertkarten mit den SIM-Modul-Karten, indem die SIM-Modul-Karten als Einsteckteile in die Wertkarten integrierbar sind.

Im einzelnen weist hierzu die Wertkarte an der entsprechenden Stelle eine Ausnehmung auf, in welcher der Einsteckteil im Klemmsitz gehalten ist. Diese Ausnehmung ist bei der bekannten Lösung als offene Ausnehmung angeordnet, wobei zur Herbeiführung des Klemmsitzes des Einsteckteils in der Ausnehmung die einander zugeordneten umlaufenden seitlichen Kanten von Einsteckteil und Ausnehmung aufeinander abgestimmte Formgestaltungen in Form von Auswölbungen/Einkehlungen aufweisen. Damit ist der Nachteil verbunden, daß die Einstellung eines gut handhabbaren Klemmsitzes über die Abmessungen der Formgestaltungen der Seitenkanten von Einsteckteil und Ausnehmung schwierig ist; entweder ist die Klemmwirkung zu gering, oder der Einrastwiderstand ist zu groß, wobei dann die Gefahr besteht, daß der Einsteckteil beim Einklipsen in die Wertkarte bei zu großem Kraftaufwand durch die Wertkarte hindurchgedrückt wird. Hinzu kommt, daß die die Abmessungen der SIM-Modul-Karte als Einsteckteil festlegende Norm eine Toleranzabweichung von jeweils 0,1 mm zuläßt, womit das Problem der richtigen Bemessungen der Klemmwirkung verstärkt ist.

Der Erfindung liegt daher die Aufgabe zugrunde, bei einer gattungsgemäßen Wertkarte die Halterung des Einsteckteils in der Wertkarte zu verbessern.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß zum Toleranzausgleich wenigstens eine Begrenzungskante der Ausnehmung zur Aufnahme des Einsteckteils in der Wertkarte mit einer federnden Klemmgestaltung versehen ist, wobei die somit vorgegebenen Abmessungen der Ausnehmung auf die geringste noch zulässige Größe einer SIM-Modul-Karte als Einsteckkkarte abgestellt sind, während die davon zulässigen Abweichungen durch die an den Begrenzungskanten der Ausnehmung vorgesehene federnde Klemmgestaltung auszugleichen ist. Damit ist in vorteilhafter Weise eine Verbesserung des Klemmsitzes des Einsteckteils in der Wertkarte gegeben.

Nach einem Ausführungsbeispiel der Erfindung sind zwei Begrenzungskanten der Ausnehmung in der Wertkarte mit einer federnden Klemmgestaltung versehen, wobei jeweils eine von zwei sich gegenüberliegenden Begrenzungskanten eine federnde Klemmgestaltung aufweist, um einen sicheren Klemmsitz der Einsteckteil in der Ausnehmung der Wertkarte auch unter Berücksichtigung der zulässigen Fertigungstoleranzen zu gewährleisten. Weiterhin können natürlich auch alle Begrenzungskanten der Ausnehmung eine federnde Klemmgestaltung aufweisen.

In einem Ausführungsbeispiel der Erfindung wird zur Verwirklichung des Toleranzausgleiches vorgeschlagen, daß die Begrenzungskanten der Ausnehmung in wellenförmigem Verlauf mit einer Abfolge von Erhöhungen und Vertiefungen ausgebildet sind und daß jeder Erhöhung eine in senkrechtem Abstand dazu unter Ausbildung eines federnden Steges angeordnete Bohrung in der Wertkarte zugeordnet ist. Es hat sich herausgestellt, daß bei den üblicherweise zur Herstellung von entsprechenden Karten verwendeten Kunststoffen eine Breite des Steges in der Größenordnung zwischen 2 bis 5 Zehntel Millimetern ausreicht, um die gewünschte Federwirkung sicherzustellen. Auch andere Klemmgestaltungen wie beispielsweise an den Begrenzungskanten ausgeformte Stege sind von der Erfindung umfaßt.

Nach einem Ausführungsbeispiel der Erfindung ist die Ausnehmung in der Wertkarte auf ihrer einen Seite mittels einer Abdeckung geschlossen; damit wird in vorteilhafter Weise ein zu einer Seite abgeschlossener Aufbewahrungsraum für den Einsteckteil geschaffen, so daß in vorteilhafter Weise die Gefahr vermieden ist, daß der Einsteckteil durch die vergleichsweise dünne Wertkarte hindurchgedrückt werden kann. Weiterhin ist mit dieser Ausführung der Vorteil verbunden, daß nach dem Einlegen des Einsteckteils in den einseitig durch die Abdeckung verschlossenen Ausnehmungsraum der Wertkarte der Einsteckteil durch Druck auf die Abdeckung wieder aus der Ausnehmung der Wertkarte leicht entnommen werden kann. Zur Bildung der Abdeckung kann bei der Herstellung der Ausnehmung durch Ausfräsen auch eine dünne Bodenplatte als Abdeckung der Ausnehmung stehen bleiben. Alternativ ist das Aufbringen einer dünnen, reißfesten Folie auf die entsprechende Seite der Wertkarte vorgesehen.

Schließlich ist nach einem Ausführungsbeispiel der Erfindung vorgesehen, daß zur Aufnahme von zwei Einsteckteilen die Wertkarte zwei bezüglich der einander gegenüberliegenden Einschubkanten der Wertkarte ausgerichtete Ausnehmungen aufweist. Damit ist in vorteilhafter Weise die Möglichkeit gegeben, eine einzige Wertkarte zur Halterung von zwei Einsteckteilen mit jeweils unterschiedlichen als Halbleiterchips ausgebildeten Informationsspeichern anzuwenden; so können dann für unterschiedliche internationale Telefonsysteme entsprechende Telefonchips angeordnet sein; diese Möglichkeit der Erfindung gilt für jede unterschiedliche Anwendung von zwei Informationsteilen mit einer Wertkarte.

In der Zeichnung ist ein Ausführungsbeispiel der Erfindung wiedergegeben, welches nachstehend beschrieben ist. Es zeigen:
- Fig. 1: eine Wertkarte in einer Draufsicht,
- Fig. 2: einen Einsteckteil in einer Draufsicht,
- Fig. 3: eine Wertkarte gemäß Figur 1 mit Klemmgestaltungen versehenen Begrenzungskanten der Ausnehmung,
- Fig. 4: die Wertkarte gemäß Figur 1 in Ausführung mit Folie in einer Rückansicht.

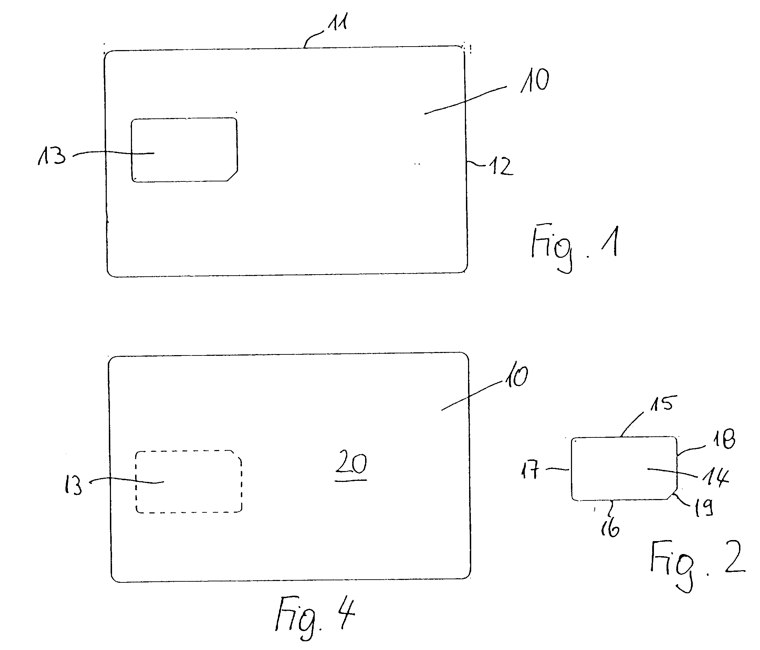

Die in Figur 1 dargestellte Wertkarte entspricht in Länge und Breite der ISO-Norm, und die rechteckige Wertkarte 10 hat an ihren längeren Seitenkanten 11 ein Maß von 85,5 mm und an ihren kürzeren Seitenkanten 12 ein Maß von 54,0 mm, bei einer Materialstärke von 0,86 mm mit der zulässigen Abweichung von ± 0,1 mm.

Die äußeren Ecken der Wertkarte 10 sind mit einem Radius von 2,0 mm abgerundet. In der Wertkarte 10 ist eine Ausnehmung 13 angeordnet, deren Abmessung auf die Abmessungen eines in Figur 2 dargestellten Einsteckteils 14 so abgestimmt sind, daß der Einsteckteil 14 in der Ausnehmung 13 der Wertkarte 10 mittels Klemmsitz festgehalten ist. Der Einsteckteil 14 ist insbesondere als SIM-Modul-Karte entsprechend der dafür geltenden Norm ausgebildet. Die Ausnehmung 13 befindet sich auf der Wertkarte 10 an einer Stelle, an der bei einer normgerechten Telefonkarte beispielsweise auch die Chips mit den zugeordneten abgespeicherten Wertinformationen angeordnet sind.

Der in Figur 2 angesprochene Einsteckteil 14 ist in seinen Abmessungen wesentlich geringer, und er weist in diesem beispielhaft angegebenen Fall eine abgefaste Ecke auf. Daraus ergibt sich für die längere Längskante 15 ein Maß von 25,1 mm, für die kürzere Längskante 16 ein solches von 22,6 mm, während die längere Querkante 17 insgesamt 15,1 mm mißt und die kürzere Querkante 18 ein Maß von 12,6 mm aufweist; die Fase 19 ist 2,5 mm lang.

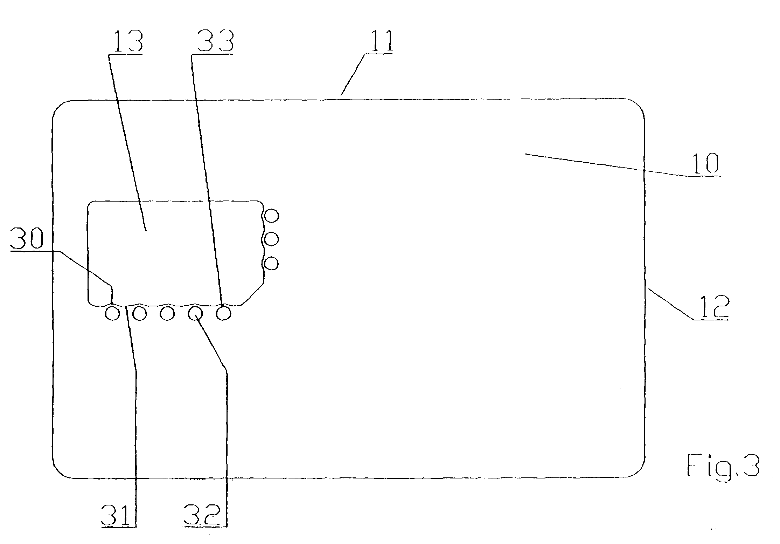

Da von den vorgenannten Maßen des Einsteckteils 14 Toleranzabweichungen von 0,1 mm zulässig sind, ist bei dem aus Figur 3 ersichtlichen Ausführungsbeispiel der Wertkarte 10 dafür Sorge getragen, daß auch bei einer Abweichung von maximal 0,2 mm der normgerechte Einsteckteil 14 in der Ausnehmung 13 der Wertkarte 10 im Klemmsitz sicher festlegbar sind. Hierzu sind bei dem dargestellten Ausführungsbeispiel je eine der gegenüberliegenden Begrenzungskanten der Ausnehmung 13 mit einer federnden Klemmgestaltung versehen, wozu die Begrenzungskanten in wellenförmigem Verlauf mit einer Abfolge von Erhöhungen 30 und Vertiefungen 31 ausgebildet sind, wobei jeder Erhöhung 30 eine Bohrung 32 in der Aufbewahrungskarte 10 zugeordnet ist, die in senkrechtem Abstand zur Erhöhung 30 angeordnet ist und einen federnden Steg 33 im Bereich jeder Erhöhung 30 stehenläßt. Es versteht sich, daß der Lichtraum der Ausnehmung 13 zwischen den Begrenzungskanten beziehungsweise deren Erhöhungen 30 auf das geringste zulässige Maß des Einsteckteils auszulegen ist.

Wie in Figur 4 angedeutet ist, ist die Rückseite der Wertkarte 10 mit einer dünnen Abdeckung 20 versehen, so daß der sich aus der Figur 1 ergebende Aufnahmeraum für den Einsteckteil 14 rückseitig abgeschlossen ist; die Abdeckung 20 ist in an sich bekannter Weise beispielsweise mit Werbeaufdrucken oder sonstigen Angaben zu versehen. Die Abdeckung 20 kann entweder entsprechend der Darstellung in Figur 4 durch eine dünne, aber reißfeste Folie gebildet sein, oder aber es kann beim Ausfräsen der Ausnehmung 13 aus der Karte 10 eine dünne Bodenfläche stehengelassen werden.

Wird der Einsteckteil 14 aus einem zugeordneten Handtelefon entnommen, so kann er in die in Figuren 1 oder 3 dargestellte Aufnahmekarte 10 eingeklipst werden; die Entnahme des Einsteckteils 14 erfolgt durch äußeren Druck auf die Abdeckung 20 der Wertkarte 10, so daß der in der Ausnehmung 13 im Klemmsitz gehaltene Einsteckteil 14 aus der Ausnehmung 13 hervortritt.

## Patentansprüche

1. Wertkarte (10) mit internationaler Normung der Außenabmessungen und der Position der Kontaktfläche eines implantierten Halbleiterchips, wobei der Halbleiterchip auf einem in seinen Abmessungen gegenüber der Wertkarte wesentlich kleineren Einsteckteil (14) angeordnet ist, welcher Einsteckteil (14) in einer in der Wertkarte (10) angeordneten Ausnehmung (13) im Klemmsitz und auswechselbar gehalten ist, wobei die Ausnehmung (13) in der Wertkarte (10) derart angeordnet ist, daß die Wertkarte (10) mit dem darin eingerasteten Einsteckteil (14) für weitere Wertkartenanwendungen benutzbar bleibt und gegebenenfalls der Einsteckteil (14) selbst als unabhängige Minichipkarte in wesentlich kleineren Endgeräten einsetzbar ist, dadurch gekennzeichnet, daß zum Toleranzausgleich wenigstens eine Begrenzungskante der in der Wertkarte (10) angeordneten Ausnehmung (13) zur Aufnahme des Einsteckteils (14) mit einer federnden Klemmgestaltung (33) versehen ist.

2. Wertkarte nach Anspruch 1, dadurch gekennzeichnet, daß zwei Begrenzungskanten der Ausnehmung (13) mit einer federnden Klemmgestaltung (33) versehen sind.

3. Wertkarte nach Anspruch 2, dadurch gekennzeichnet, daß alle Begrenzungskanten der Ausnehmung (13) eine federnde Klemmgestaltung (33) aufweisen.

4. Wertkarte nach Anspruch 2, dadurch gekennzeichnet, daß jeweils eine von zwei sich gegenüberliegenden Begrenzungskanten der Ausnehmung (13) eine federnde Klemmgestaltung (33) aufweisen.

5. Wertkarte nach einem der Ansprüche 1 bis 4, dadurch gekennzeichnet, daß die Begrenzungskanten der Ausnehmung (13) in wellenförmigem Verlauf mit einer Abfolge von Erhöhungen (30) und Vertiefungen (31) ausgebildet sind und daß jeder Erhöhung (30) eine in senkrechtem Abstand dazu unter Ausbildung eines federnden Steges (33) angeordnete Bohrung (32) in der Wertkarte (10) zugeordnet ist.

6. Wertkarte nach Anspruch 5, dadurch gekennzeichnet, daß die Breite der Stege (33) etwa zwei bis fünf Zehntel Millimeter beträgt.

7. Wertkarte nach einem der Ansprüche 1 bis 6, dadurch gekennzeichnet, daß die Ausnehmung (13) in der Wertkarte (10) auf ihrer einen Seite mittels einer Abdeckung (20) geschlossen ist.

8. Werkarte nach Anspruch 7, dadurch gekennzeichnet, daß die Abdeckung (20) aus einer die Wertkarte an der zugehörigen Seite überziehenden Folie besteht.

9. Wertkarte nach Anspruch 7, dadurch gekennzeichnet, daß die Ausnehmung (13) in der Wertkarte (10) unter Stehenlassen einer als Abdeckung (20) für die Ausnehmung (13) wirkenden Bodenfläche ausgefräst ist.

10. Wertkarte nach einem der Ansprüche 1 bis 9, dadurch gekennzeichnet, daß zur Aufnahme von zwei Einsteckteilen (14) die Wertkarte (10) zwei bezüglich der einander gegenüberliegenden Einschubkanten (12) ausgerichtete Ausnehmungen (13) aufweist.

## Claims

1. Authorisation card (10) with international standardisation of the external dimensions and the position of the contact surface of an implanted semiconductor chip, wherein the semiconductor chip is disposed on a push-in part (14) of substantially smaller dimensions than the authorisation card, which push-in part (14) is held in a recess (13), which is disposed in the authorisation card (10), with a clamp fit and such that it can be interchanged, wherein the recess (13) is disposed in the authorisation card (10) such that the authorisation card (10) with the push-in part (14) engaged therein remains usable for other card applications and the actual push-in part (14) may optionally be inserted as an independent mini-chip card in substantially smaller terminal devices,
characterised in that at least one boundary edge of the recess (13) disposed in the authorisation card (10) to accommodate the push-in part (14) is provided with a resilient clamping formation (33) for tolerance compensation.

2. Authorisation card according to claim 1, characterised in that two boundary edges of the recess (13) are provided with a resilient clamping formation (33).

3. Authorisation card according to claim 2, characterised in that all the boundary edges of the recess (13) comprise a resilient clamping formation (33).

4. Authorisation card according to claim 2, characterised in that one of two mutually opposite boundary edges of the recess (13) in each case comprises a resilient clamping formation (33).

5. Authorisation card according to one of claims 1 to 4, characterised in that the boundary edges of the recess (13) are formed so as to extend in undulatory fashion with a sequence of elevations (30) and depressions (31), and that a hole (32) in the authorisation card (10) is associated with each elevation (30) and disposed at a perpendicular spacing therefrom so as to form a resilient web (33).

6. Authorisation card according to claim 5, characterised in that the webs (33) are approximately two to five tenths of a millimetre wide.

7. Authorisation card according to one of claims 1 to 6, characterised in that the recess (13) in the authorisation card (10) is closed on one side by means of a cover (20).

8. Authorisation card according to claim 7, characterised in that the cover (20) consists of a film which overlays the authorisation card on the associated side.

9. Authorisation card according to claim 7, characterised in that the recess (13) in the authorisation card (10) is milled out while leaving a bottom surface acting as a cover (20) for the recess (13).

10. Authorisation card according to one of claims 1 to 9, characterised in that the authorisation card (10) comprises two recesses (13), which are aligned relative to the mutually opposite slide-in edges (12), to accommodate two push-in parts (14).

## Revendications

1. Carte à mémoire (10) dont les dimensions et l'emplacement de la surface de contact d'une puce à semi-conducteur insérée satisfont à la normalisation internationale, la puce à semi-conducteur étant disposée sur un élément enfichable (14) dont les dimensions sont nettement inférieures à celles de la carte à mémoire, lequel élément enfichable (14) étant ajusté, de manière amovible et par pression dans un évidement (13) agencé dans la carte à mémoire (10), l'évidement (13) étant agencé de telle sorte dans la carte à mémoire (10) que la carte à mémoire (10), lorsque l'élément enfichable (14) y est intégré, puisse également être utilisée dans le cadre d'autres applications de carte à mémoire et que l'élément enfichable (14) puisse, le cas échéant, être lui-même utilisé comme une mini carte à puce indépendante dans des terminaux de taille sensiblement inférieure, caractérisée en ce que, en vue de respecter les tolérances, au moins une arête délimitant l'évidement (13) prévu dans la carte à mémoire (10) pour loger l'élément enfichable (14) est dotée d'une structure de fixation élastique (33).

2. Carte à mémoire selon la revendication 1, caractérisée en ce que deux arêtes délimitant l'évidement (13) sont dotées d'une structure de fixation élastique (33).

3. Carte à mémoire selon la revendication 2, caractérisée en ce que toutes les arêtes délimitant l'évidement (13) présentent une structure de fixation élastique (33).

4. Carte à mémoire selon la revendication 2, caractérisée en ce que respectivement l'une des deux arêtes de délimitation opposées l'une par rapport à l'autre présente une structure de fixation élastique (33).

5. Carte à mémoire selon l'une des revendications 1 à 4, caractérisée en ce que les arêtes délimitant l'évidement (13) sont réalisées en forme d'onde et présentent une succession de bosses (30) et de creux (31), et en ce que chaque bosse (30) correspond dans la carte à mémoire (10)un alésage (32), situé à une certaine distance de celle-ci sur la verticale pour former une tige élastique (33).

6. Carte à mémoire selon la revendication 5, caractérisée en ce que la largeur des tiges (33) est de 0,2 à 0,5 mm.

7. Carte à mémoire selon l'une des revendications 1 à 6, caractérisée en ce que l'évidement (13) de la carte à mémoire (10) est obturé sur un de ses côtés à l'aide d'un cache (20).

8. Carte à mémoire selon la revendication 7, caractérisée en ce que le cache (20) est constitué d'une feuille recouvrant la carte à mémoire du côté concerné.

9. Carte à mémoire selon la revendication 7, caractérisée en ce que l'évidement (13) de la carte à mémoire (10) est fraisé pour laisser une surface faisant office de cache (20) pour l'évidement (13).

10. Carte à mémoire selon l'une des revendications 1 à 9, caractérisée en ce que, afin de loger deux éléments enfichables (14), la carte à mémoire (10) présente deux évidements (13) orientés en fonction des arêtes à insérer (12) opposées l'une à l'autre.
